# EUROPEAN PATENT SPECIFICATION

(11) **EP 0 346 010 B1**
(45) Date of publication and mention of the grant of the patent: **26.01.1994**
(21) Application number: 89305545.9
(22) Date of filing: 02.06.1989
(51) Int. Cl.: A01K 89/015

(54) **Double bearing reel**
Doppelt gelagerte Angelrolle
Moulinet de pêche à bobine rotative supportée par deux roulements

(30) Priority: 08.06.1988 JP 76205/88
(43) Date of publication of application: 13.12.1989
(73) Proprietor: SHIMANO INDUSTRIAL COMPANY LIMITED, Osaka (JP)
(72) Inventor: Sakaguchi, Noboru, Tondabayashi-shi Osaka (JP)
(74) Representative: Jones, Andrée Zena

(56) References cited:
- FR-A- 2 586 528
- FR-A- 2 601 557
- US-A- 2 184 149
- US-A- 2 380 213
- US-A- 3 499 609
- US-A- 3 771 746

## Description

The present invention relates to a double bearing reel, and more particularly to a double bearing reel having a driving mechanism for changing the rotation speed of a spool.

Generally, the double bearing reel, as disclosed in the Japanese Utility Model Publication Gazette No. Sho 60-13359, is so constructed that a spool shaft for a spool and a handle shaft are rotatably supported on a reel body; around the handle shaft are supported a main gear, a stationary side braking member and a rotational side braking member for applying a braking force to rotation of the spool, and an adjuster for adjusting the braking force; a pinion engageable with the main gear is provided at the spool shaft so that a driving force from the handle shaft is transmitted to the spool through the braking members, main gear, pinion and spool shaft to thereby drive the spool; and when a fishing line drawn out from the spool is subjected to tension in the drawing direction, the tension acts on the rotational side braking member through the spool, spool shaft, pinion and main gear, so that a slip is generated between the rotational side braking member and the stationary side braking member, thereby slidably rotating the spool.

The above double bearing reel drives the spool at a predetermined speed change ratio decided by a gear ratio of the one main gear to the one pinion engageable therewith. Besides this, a double bearing reel has been provided which uses two gears different in diameter so that the spool can be changed with respect to the driving speed.

Such double bearing reel, as disclosed in the Japanese Patent Laid-Open Gazette No. Sho 60-207539, is so constructed that a pair of bearings are interposed between the spool and the spool shaft, the spool being supported to the spool shaft rotatably and axially movably thereto through the bearings, a plurality of speed change gears are provided at one axial end of the spool shaft and around the handle shaft, the handle shaft axially movable is axially moved to change-over the speed change gear to one of low speed drive and high speed drive, and around the other axial end of the spool shaft are provided the stationary side braking member and rotational side braking member for applying a braking force to rotation of the spool, so that a driving force from the handle shaft is transmitted to the spool through the speed change gear, spool shaft and braking members, and also tension applied to a fishing line drawn out from the spool acts on the rotational side braking member through the spool, thereby causing a slip between the rotational braking member and the stationary braking member.

The latter reel adapted to change the driving speed for the spool is quite different in basic construction from the usual double bearing reel, in other words, the spool is rotatable and axially movable relative to the spool shaft, the handle shaft is axially movable, and a drive unit provided with a plurality of gears and a drag unit for applying the braking force to rotation of the spool are disposed separately at both axial ends of the spool shaft, thereby creating the problem in that the reel is very complicated in construction and largely high in the manufacturing cost.

U.S. Patent Specification No. 3499609 discloses a double bearing reel provided with a reel body, a spool shaft rotatably supported in the reel body and a spool mounted on the shaft. A handle shaft is provided to drive the spool shaft through a mechanism comprising two main gears of differing diameter each rotatably supported around the handle shaft, and a shifter in the form of a transversely arranged key member slidable axially along the handle shaft to transmit drive from the handle shaft to one of the two main gears. The spool is connected to the spool shaft by a friction clutch or brake mechanism provided in the reel housing. Arcuate brake shoes with friction linings engage an axially extending flange on the spool end. The shifter is operated by an operating rod for selecting one of the two main gears, the rod being controlled by an operative portion external of the reel body. Pinions on the spool shaft transmit the driving force from one of the main gears to the spool shaft and comprise a first pinion engageable with a first of the gears and a second pinion engageable with the second of the gears.

An object of the invention is to provide a double bearing reel which can change the driving speed for the spool by changing construction to a minimum without changing the basic construction of the usual double bearing reel.

The present invention therefore provides a double bearing reel, which is provided with a reel body, a spool shaft rotatably supported to said reel body and having a spool, and a handle shaft for driving said spool shaft, said double bearing reel being provided with,
a) two main gears being first and second main gears of different diameter, which are rotatably supported around said handle shaft,
b) a shifter for selectively transmitting rotation of said handle shaft to one of said first and second main gears,
c) a drag mechanism provided with handle shaft side braking means mounted for rotation with said handle shaft ,
d) operating means for selecting said shifter for one of said first and second main gears and having an operating member positioned at the exterior of said reel body,
e) pinions supported on said spool shaft so as to transmit to said spool shaft a driving force transmitted to said main gears, and comprising a first pinion engageable with said first main gear and a second pinion engageable with said second main gear, and
f) a sleeve which is rotatably supported on said handle shaft, said sleeve being provided with sleeve side braking means mounted for rotation with the sleeve, said handle shaft side braking means being positioned with respect to said sleeve side braking means, so as to confront the same axially of the handle shaft, said sleeve being provided with said shifter for selectively transmitting rotation of said handle shaft to one of said first and second main gears.

Accordingly, in the present invention, the shifter at the sleeve is operated to select the first or the second main gear, thereby enabling the spool to be driven at low or high speed, and a simple construction can change the driving speed for the spool by utilizing the handle shaft without largely changing the usual double bearing reel in construction.

In the aforesaid construction, the shifter is operated to transmit a driving force from the handle shaft to the spool through the braking members of the drag mechanism; sleeve; shifter; first main gear and first pinion, or the second main gear and second pinion; and spool shaft; thereby enabling the spool to be driven at low or high speed. Also, tension applied to the fishing line drawn out from the spool is transmitted to the sleeve side braking members through the spool shaft; first pinion and first main gear,or the second pinion and second main gear; shifter; and sleeve; so that a slip is caused between the sleeve side braking members and the handle shaft side braking members, thereby slidably rotating the spool.

The above and further objects and novel features of the invention will more fully appear from the following description when the same is read in connection with the accompanying drawings, in which:-
Fig.1 is a partially cutaway view of an embodiment of a double bearing reel of the invention,
Fig.2 is an enlarged sectional view of the principal portion thereof,
Fig.3 is a sectional view taken on the line III-III in Fig.1, and
Fig.4 is a sectional view explanatory of operation of the same, corresponding to Fig. 2.

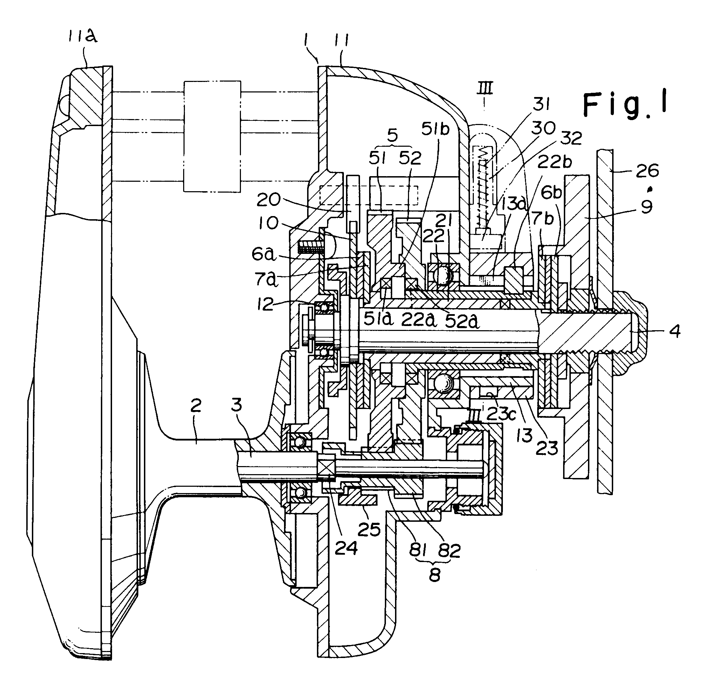

A double bearing reel of the invention is the same in construction as the usual one. Referring to Fig.1, a spool shaft 3 holding a spool 2 is rotatably supported between side frames 11 and 11a at a reel body 1, to the side frame 11 is journalled a handle shaft 4 parallel to the spool shaft 3, around the handle shaft 4 are provided main gears 5 to be discussed below, handle shaft side braking members 6a and 6b and sleeve side braking members 7a and 7b for applying a driving force to rotation of the spool 2, an adjuster 9 for adjusting the braking force, and an anti-reverse-rotation gear 10, and a pinion 8 engageable with the main gears 5 is provided at one axial end of the spool shaft 3.

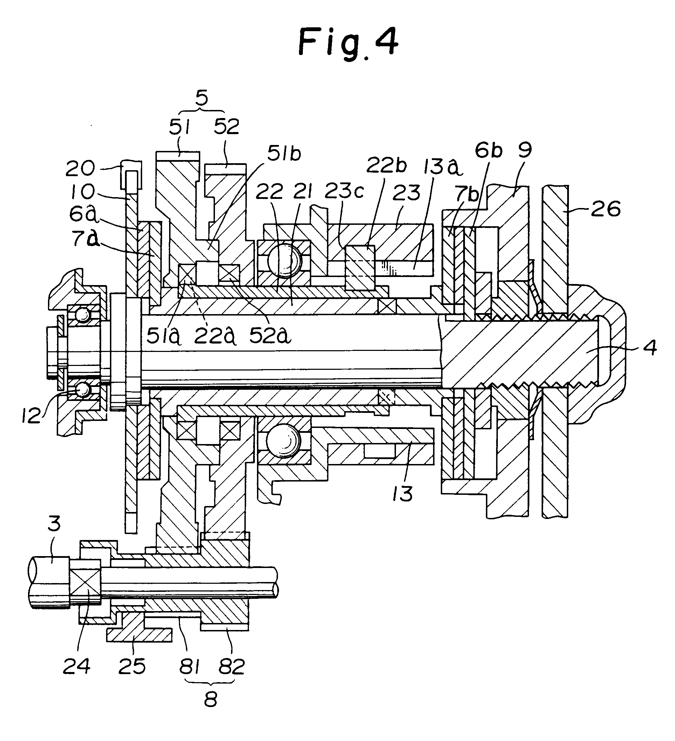

In the embodiment shown in Figs.1 through 4, a sleeve 21 is rotatably supported onto the outer periphery of the handle shaft 4, at the outer periphery of one axial end of the sleeve 21 are supported a larger diameter first main gear 51 and a smaller diameter second main gear 52 therethrough, the first and second main gears being rotatable relative to each other, and at one axial end of the spool shaft 3 are provided a smaller diameter first pinion 81 engageable with the first main gear 51 and a larger diameter second pinion 82 engageable with the second main gear 52. Also, at the outer periphery of the sleeve 21 is axially movably supported a shifter 22 which selectively transmits rotation of the handle shaft 4 to the first main gear 51 or the second main gear 52 and is operable from the exterior of the reel body 1.

In the above construction , the handle shaft 4 is supported at the root thereof to the side frame 11 through a bearing 12, at the outer periphery of the base of the handle shaft 4 is rotatably supported the anti-reverse-rotation gear 10 engageable with an anti-reverse-rotation pawl 20 pivoted to the side frame 11, the adjuster 9 screws with the outer periphery of the utmost end of handle shaft 4, and the sleeve 21 is supported to the outer periphery of an intermediate portion of the same.

The sleeve 21 is provided at the outer peripheries of both front and rear ends with larger diameter portions respectively. The first main gear 51 is rotatably supported onto the outer periphery of the larger diameter portion at the front end and the sleeve side braking member 7a is not-relative-rotatably supported at the axially outside of the larger diameter portion at the front end, and opposite to the handle shaft side braking member 6a supported to the root of handle shaft 4. The sleeve side braking member 7b opposite to the handle side braking member 6b not-relative-rotatably supported to the utmost end of the handle shaft 4 is not-relative-rotatably supported at the axially outside of the larger diameter portion at the rear end of the sleeve 21.

The adjuster 9 screws forward to bring the handle shaft side braking members 6a and 6b in press-contact with the sleeve side braking members 7a and 7b opposite thereto at the root and outermost end of the handle shaft 4 respectively, thereby adjusting a dragging braking force. In other words, when the spool 2 is intended to reversely rotate by tension applied to the fishing line, the reverse-rotating force is transmitted to the sleeve 21 and braked by the anti-reverse-rotation gear 10 engaging with the anti-reverse-rotation pawl 20 to be restrained from the reverse rotation, the handle shaft 4 held in the stationary state, and the braking members 6a, 6b, 7a and 7b. When the reverse-rotating force exceeds the dragging braking force established by the adjustor 9, a slip is caused beween the respective braking members , so that the spool 2 reversely rotates while being applied with the predetermined braking force.

The sleeve, which is provided with the shifter 22 for selectively transmitting the driving force transmitted from the handle shaft 4 to the first or second main gear 51 or 52, is formed of a pair of divided portions so that the shifter 22 is assembled therebetween. The shifter 22 is supported to the sleeve 21 in relation of being axially movable between the larger diameter portions at both the axial ends of sleeve 21 and provided circumferentially at the outer periphery of one end with an engaging portion 22a engageable with engaging portions 51a and 52a at the inner peripheries of the first and second main gears 51 and 52.

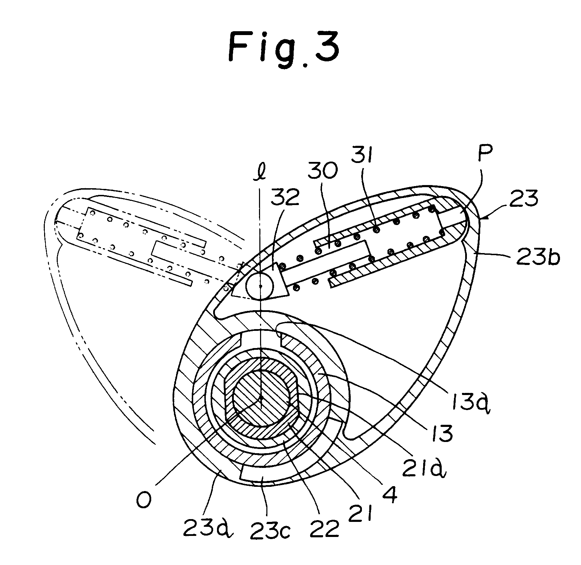

In greater detail, the shifter 22, as shown in Fig.3, is cylindrical and has at the inner periphery thereof a pair of flat faces engageable with flat faces 21a formed at the outer periphery of the sleeve 21, thereby being supported not-rotatably and axially movably only to the sleeve 21.

Also, the other end of the shifter 22 projects outwardly from the reel body 1, an annular groove is provided at the outer periphery of the projection, and an engaging projection 22b is relative-movably supported into the annular groove and axially moves by operation of an operating member 23.

The operating member 23 comprises a boss 23a supported rotatably only on a support cylinder 13 projecting outwardly from the side frame 11 and concentrically with the handle shaft 4 and an operating portion 23b projecting outwardly from one side of the boss 23a, a spiral groove 23c engageable with the engaging projection 22b is provided at the inner periphery of the boss 23a, and a slit 13a for guiding the engaging projection 22b is provided at the support cylinder 13, so that the operating member 23 is rotated to move the shifter 22 axially in reciprocation.

The main gears 51 and 52 are circumferentially provided at the outer peripheries thereof with a large number of teeth and at the inner peripheries with the engaging portions 51a and 52a respectively. An annular projection 51b projects from one side surface of the first main gear 51 rotatably supported to the larger diameter portion at the sleeve 21 and the second main gear 52 is relative-rotatably supported to the annular projection 51b.

The pinions 81 and 82 are integral with each other and rotatable and axially movable with respect to the spool shaft 3, the first pinion 81 extends outwardly at one end, a clutch 24 is provided between the inner periphery of the extension of pinion 81 and the outer periphery of an intermediate portion of the spool shaft 3, a clutch yoke 25 engages with the outer surface of the extension, and a clutch lever ( not shown ) slidably supported to the side frame 11 is operated to axially move the pinions 81 and 82 through the clutch yoke 25, thereby engaging or disconnecting the clutch 24.

An unstable change-over holding mechanism 30 for biasing and holding the operating member 23 to the low speed operation position or the high speed operation position is provided between the operating member 23 and the side frame 11, and comprises a coil spring 31 and first and second spring holders 32 and 33, the first spring holder 32 being swingably pivoted at the position shifting from the supporting center 0 of the operating member 23 at the side frame 11 and holding one end of the coil spring 31, the second spring holder 33 being swingably supported to the inner periphery of the operating portion 23b so as to hold the other end of the coil spring 31, so that when the operating member 23 rotates and the supporting position P of the spring 31 at the operating portion 23b , that is, the support position of the second spring holder 33, moves toward one side in the operating direction beyond the line l connecting the pivot position of the first spring holder 32 and the supporting position O for the operating member 23, the operating member 23 is adapted to be biased to the low speed operation position, and , when the position P moves toward the other side beyond the line l, the same is biased toward the high speed operation position. In addition, the above-mentioned construction, when the operating member 23 is operated, even though the engaging portion 22a at the shifter 22 is shifted from the engaging portions 51a and 52a at the main gears 51 and 52 in engagement therewith, can be utilized as an engagement waiting mechanism. In detail, in a case where the operating member 23 is operated to move the shifter 22 for changing the speed, even when the support position P at the operating member 23 moves beyond the line l and the shifter 22 contacts with the side surface of the main gear 51 or 52 so that the engaging portion 22a does not engage with the engaging portion 51a or 52a, the engagement of the engaging portion 22a by the rotation of handle shaft 4 or spool 2 can be waited. Hence, when the handle shaft 4 or the spool 2 is rotated, the operating member 23 in a halt at the position beyond the line l is automatically rotated by a spring force of coil spring 31 toward the low speed operation position or the high speed operation position, thereby moving the shifter 22 to allow the engaging portion 22a to engage with the engaging portion 51a or 52a.

In addition, in the drawing, reference numeral 26 designates a handle mounted on the utmost end of handle shaft 4.

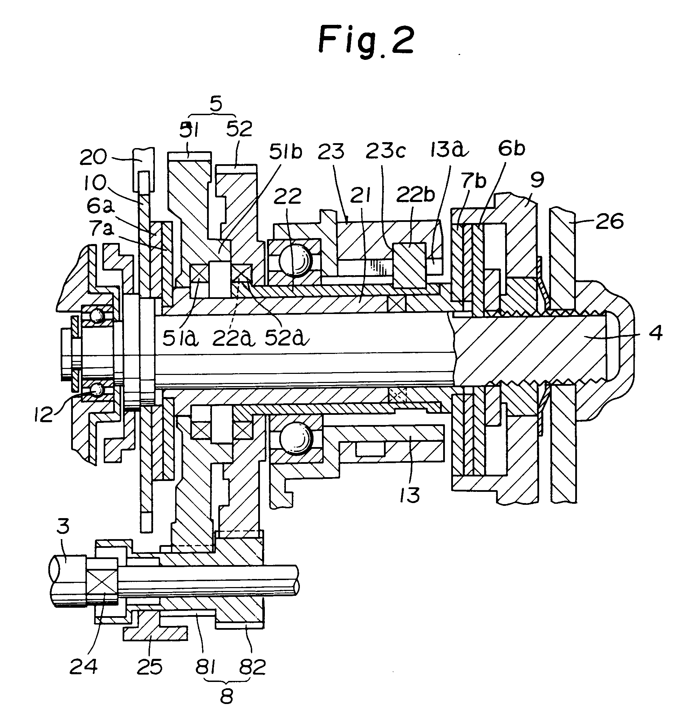

In the double bearing reel of the invention constructed as the above-mentioned, when the spool is changed-over from the low speed driving mode in Figs.1 and 2 to the high speed driving mode, the operating member 23 is rotated counterclockwise in Fig.3 so as to be operated to the high speed operation position as shown by the chain line in Fig.3, whereby the shifter 22 moves toward the first main gear 51 and the engaging portion 22a engages with the engaging portion 51a at the first main gear 51. Hence, the driving force from the handle shaft 4 can be transmitted to the spool 2 through the handle shaft side braking member 6b, sleeve side braking member 7b, sleeve 21, shifter 22, first main gear 51, first pinion 81 and spool shaft 3, thereby driving the spool 2 at high speed.

When the spool 2 is changed-over from the high speed driving mode to the low speed that, the operating member 23 at the high speed operation position shown by the chain line in Fig.3 is rotated clockwise and operated toward the low speed operation position shown by the solid line. Hence, the shifter 22 moves towards the second main gear 52 and the engaging portion 22a engages with the engaging portion 52a at the second main gear 52. Accordingly, the driving force from the handle shaft 4 is transmitted to the spool 2 through the handle shaft side braking member 6b, sleeve side braking member 7b, sleeve 21, shifter 22, second main gear 52, second pinion 82, and spool shaft 3, thereby driving the spool 2 at low speed.

When the fishing line drawn out from the spool 2 is subjected to tension in the drawing direction during the fishing, the tension is transmitted from the spool 2 to the sleeve side braking members 7a and 7b through the spool shaft 3, first pinion 81 and first main gear 51 , or second pinion 82 and second main gear 52, shifter 22, and sleeve 21, whereby a slip is caused between the sleeve side braking members 7a and 7b and the handle side braking members 6a and 6b so that the spool 2, in condition of being applied with the predetermined braking force, slidably rotates with respect to the handle shaft 4.

In a case where the operating member 23 is rotated for speed change and the engaging portion 22a at the shifter 22 does not engage with the engaging portion 51a or 52a, but interferes with the side surface thereof so as to cause resistance over the predetermined value, against operation, the operating member 23 stops at the position where the support position P thereof moves beyond the line l. When the handle shaft 4 or the spool 2 is intended to rotate to engage the engaging portion 22a with the engaging portion 51a or 52a, the coil spring 31 is actuated to automatically rotate the operating member 23 in a halt at the above-mentioned position, toward the low speed operation position or the high speed operation position, and also the shifter 22 moves toward the first main gear 51 or the second main gear 52, whereby the engaging portion 22a engages with the engaging portion 51a or 52a.

In addition, alternatively, the handle shaft side braking members 6a and 6b and sleeve side braking members 7a and 7b may be provided only at the utmost end of the handle shaft 4.

Alternatively, for example, the operating member 23 may be supported to the handle shaft 4 in relation of being movable radially thereof, a cam face may be provided between the opposite surfaces of the operating member 23 and shifter 22, and a spring for biasing the shifter 22 toward the cam face may be provided between the shifter 22 and the sleeve 21 or the side frame 11 stationary with respect to the shifter 22, so that the operating member 23 may be operated to axially move the shifter 22.

As seen from the above, in the present invention, the usual double bearing reel is not changed of its basic construction such that the spool and handle shaft are rotatably supported to the reel body , the handle shaft side braking members, sleeve side braking members for applying the braking force to the rotation of the spool, and main gear, are provided around the handle shaft, and the pinion is provided at the spool shaft; and is provided with two main gears, two pinions, sleeve, and shifter, thereby changing the driving speed for the spool only by changing the construction to a minimum . Accordingly, the double bearing reel can be provided which is simple in construction and inexpensive to produce while the spool can be driven by changing the speed.

## Claims

1. A double bearing reel provided with a reel body (1), a spool shaft (3) rotatably supported to said reel body (1) and having a spool (2), and a handle shaft (4) for driving said spool shaft, said double bearing reel being provided with,
a) two main gears being first (51) and second (52) main gears of different diameter, which are rotatably supported around said handle shaft (4),
b) a shifter (22) for selectively transmitting rotation of said handle shaft (4) to one of said first and second main gears (51,52),
c) a drag mechanism provided with handle shaft side braking means (6a;6b) mounted for rotation with said handle shaft (4),
d) operating means for selecting said shifter (22) for one of said first and second main gears (51,52) and having an operating member (23) positioned at the exterior of said reel body (1),
e) pinions (81,82) supported on said spool shaft (3) so as to transmit to said spool shaft a driving force transmitted to said main gears (51,52), and comprising a first pinion (81) engageable with said first main gear (51) and a second pinion (82) engageable with said second main gear (52), and
f) a sleeve (21) which is rotatably supported on said handle shaft (4), said sleeve (21) being provided with sleeve side braking means (7a;7b) mounted for rotation with the sleeve (21), said handle shaft side braking means (6a;6b) being positioned with respect to said sleeve side braking means (7a;7b), so as to confront the same axially of the handle shaft (4), said sleeve (21) being provided with said shifter (22) for selectively transmitting rotation of said handle shaft (4) to one of said first and second main gears (52).

2. A double bearing reel according to claim 1, wherein said shifter (22) is provided with a projecting portion (22) projecting from said reel body (1), said projecting portion is provided with a fitting-in projection (22b), said reel body is provided with a support cylinder (13) projecting concentrically with said handle shaft (4), and said support cylinder rotatably supports a boss (23a) of said operating member (23), said boss having a spiral groove (23c) engageable with said fitting-in projection.

3. A double bearing reel according to claim 2, wherein said operating means is provided with said boss (23a) supported on said support cylinder (13) and an operating portion (23b) extending outwardly from said boss (23a), and between said operating member and said reel body (1) supporting said operating member is provided an unstable change-over holding mechanism (30) for biasing said operating member (23) toward a low speed operation position or a high speed operation position and holding said operating member thereto.

4. A double bearing reel according to claim 3, wherein said unstable change-over holding mechanism (30) comprises a first spring holder (32) swingably supported to said reel body (1), a second spring holder (33) swingably supported on an operating portion of said operating member (23), and a coil spring (31) supported between said spring holders, said first spring holder (32) shifting at the pivot position thereof from the center of the support position of said operating member (23).

5. A double bearing reel according to claim 1, wherein said sleeve (21) extends along said handle shaft and projects outwardly from said reel body (1), on said projection is supported said sleeve side braking member (7a,7b) opposite to said handle shaft side braking member (6a,6b) supported to said handle shaft (4), and an adjuster (a) is screwably mounted to said handle shaft so as to screw forwardly to adjust a dragging braking force of said drag mechanism comprising said respective braking members (6a,6b,7a,7b).

6. A double bearing reel according to claim 5, wherein an anti-reverse-rotation gear (10) is rotatably supported at the base of said handle shaft (4), said reel body (1) including an anti-reverse-rotation pawl (20) engageable with said anti-reverse-rotation gear (10), said sleeve side braking member (7a,7b) is supported at the outermost end of said sleeve (21), and said handle shaft side braking member in press-contact with said anti-reverse-rotation gear (10) is supported at the base of said handle shaft (4).

## Patentansprüche

1. Doppelt gelagerte Angelrolle mit einem Rollenkörper (1), einer Spulenwelle (3), die drehbar am Rollerkörper (1) gelagert ist und eine Spule (2) besitzt, und einer Handkurbelwelle (4) zum Antreiben der Spulenwelle, aufweisend:
a) zwei Hauptantriebe, die erste (51) und zweite (52) Hauptzahnräder unterschiedlichen Durchmessers sind, die drehbar um die Handkurbelwelle (4) gelagert werden,
b) einen Schieber (22) zur selektiven Übertragung der Rotation der Handkurbelwelle (4) zu einem der ersten und zweiten Hauptzahnräder (51, 52),
c) eine mit handkurbelwellenseitigen Bremsmitteln (6a; 6b) versehenen Zugeinrichtung, die zur Rotation mit der Handkurbelwelle (4) angeordnet sind,
d) Betätigungsmittel zum Auswählen des Schiebers (22) für eines der ersten und zweiten Hauptzahnräder (51, 52) und mit einem Betätigungselement (23), das an der Außenseite des Rollenkörpers (1) angebracht ist,
e) Zahnritzel (81, 82), die auf der Spulenwelle (3) gelagert sind, um der Spulenwelle eine Antriebskraft zu übertragen, die zu den Hauptzahnrädern (51, 52) übertragen wird, und aufweisend ein erstes Zahnritzel (81), das in Eingriff bringbar mit dem ersten Zahnrad (51) und ein zweites Zahnritzel (82), das in Eingriff bringbar mit dem zweiten Hauptzahnrad (52) ist, und
f) eine Buchse (21), die drehbar auf der Hauptkurbelwelle (4) gelagert ist, wobei die Buchse (21) mit buchsenseitigen Bremsmitteln (7a; 7b) versehen ist, die zur Rotation mit der Buchse (21) angeordnet sind; die handkurbelwellenseitigen Bremsmittel (6a; 6b) in bezug zur den buchsenseitigen Bremsmitteln (7a; 7b) angeordnet sind, um denselben axial der Handkurbelwelle (4) gegenüberzuliegen; die Buchse (21) mit dem Schieber (22) zur selektiven Übertragung der Rotation der Handkurbelwelle (4) zu eines der ersten oder zweiten Hauptzahnräder (51, 52) vorgesehen ist.

2. Doppelt gelagerte Angelrolle nach Anspruch 1, dadurch gekennzeichnet, daß der Schieber (22) mit einem vom Rollenkörper (1) hervorstehenden Abschnitt (22) versehen ist, der einen Einsteckvorsprung (22b) aufweist, wobei der Rollenkörper mit einem Trägerzylinder (13) versehen ist, der konzentrisch von der Handkurbelwelle (4) hervorsteht, und der Trägerzylinder drehbar einen Nocken (23a) des Betätigungsmittels (23) trägt, der eine Spiralnut (23c) aufweist, die mit dem Einsteckvorsprung in Eingriff bringbar ist.

3. Doppelt gelagerte Angelrolle nach Anspruch 2, dadurch gekennzeichnet, daß das Betätigungsmittel mit dem Nocken (23a), der auf dem Trägerzylinder (13) getragen wird, und einem Betätigungsabschnitt (23b) versehen ist, der sich vom Nocken (23a) nach außen erstreckt, und daß zwischen dem Betätigungsmittel und dem das Betätigungsmittel haltenden Rollenkörper (1) eine instabile Umstell-Halteeinrichtung (30) zum Vorspannen des Betätigungsmittels (23) zu einer Betätigungsposition niedriger Drehzahl oder einer Betätigungsposition hoher Drehzahl und zum Halten des Betätigungsmittels daran vorgesehen ist.

4. Doppelt gelagerte Angelrolle nach Anspruch 3, dadurch gekennzeichnet, daß die instabile Umstell-Halteeinrichtung (30) einen ersten Federhalter (32), der schwingbar am Rollenkörper (1) gelagert, einen zweiten Federhalter (33), der schwingbar an einem Betätigungsabschnitt des Betätigungsmittels (23) gelagert, und eine Schraubenfeder (31) aufweist, die zwischen den Federhaltern gelagert ist, wobei der erste Federhalter (32) an seiner Schwenkposition vom Mittelpunkt der Halteposition des Betätigungsmittels (23) verschoben ist.

5. Doppelt gelagerte Angelrolle nach Anspruch 1, dadurch gekennzeichnet, daß sich die Buchse (21) entlang der Handkurbelwelle erstreckt und vom Rollenkörper nach außen hervorragt, auf dem Vorsprung das buchsenseitige Bremselement (7a, 7b) gegenüber dem an der Handkurbelwelle (4) gehaltenen handkurbelwellenseitigen Bremselement (6a, 6b) gelagert ist, und ein Einsteller (a) schraubbar an der Handkurbelwelle angeordnet ist, um eingeschraubt zu werden, um eine Zugbremskraft der Zugeinrichtung, die die jeweiligen Bremselemente (6a, 6b, 7a, 7b) aufweist, einzustellen.

6. Doppelt gelagerte Angelrolle nach Anspruch 5, dadurch gekennzeichnet, daß ein Antirevers-Rotationsantrieb (10) drehbar am Ende der Handkurbelwelle (4) gelagert ist, der Rollenkörper (10) eine Antirevers-Rotationssperrklinke (20) aufweist, die in Eingriff bringbar mit dem Antirevers-Rotationsantrieb (10) ist, das buchsenseitige Bremselement (7a, 7b) am äußersten Ende der Buchse (21) gelagert ist und das handkurbelwellenseitige Bremselement in Druckkontakt mit dem Antirevers-Rotationsantrieb (10) am Ende der Handkurbelwelle gelagert ist.

## Revendications

1. Moulinet de pêche à double palier comprenant un corps de moulinet (1), un arbre de bobine (3) supporté de façon tournante sur ledit corps de moulinet (1) et comportant une bobine (2), et un arbre de manivelle (4) pour entraîner ledit arbre de bobine, ledit moulinet à double palier comprenant :
(a) deux pignons principaux, à savoir un premier (51) et un deuxième (52) pignons principaux de diamètre différent, qui sont supportés de façon tournante sur ledit arbre de manivelle (4),
(b) un élément de commutation (22) pour transmettre sélectivement la rotation dudit arbre de manivelle (4) à un desdits premier et deuxième pignons principaux (51,52),
(c) un mécanisme de freinage comportant des moyens de freinage côté arbre de manivelle (6a;6b) montés pour rotation avec ledit arbre de manivelle (4),
(d) des moyens de manoeuvre pour disposer ledit élément de commutation (22) afin de choisir un desdits premier et deuxième pignons principaux (51,52), comportant un organe de manoeuvre (23) placé à l'extérieur du dit corps de moulinet (1),
(e) des pignons (81,82) supportés sur ledit arbre de bobine (3) de façon à transmettre audit arbre de bobine une force d'entraînement transmise auxdits pignons principaux (51,52) et comprenant un premier pignon (81) qui peut venir en prise avec ledit premier pignon principal (51) et un deuxième pignon (82) qui peut venir en prise avec ledit deuxième pignon principal (52), et
(f) un manchon (21) qui est supporté de façon tournante sur ledit arbre de manivelle (4), ledit manchon (21) étant pourvu de moyens de freinage côté manchon (7a; 7b) montés pour rotation avec le manchon (21), lesdits moyens de freinage côté arbre de manivelle (6a;6b) étant placés par rapport auxdits moyens de freinage côté manchon (7a;7b) de façon à être en face de ces derniers dans la direction axiale de l'arbre de manivelle (4), ledit manchon (21) portant ledit élément de commutation (22) pour transmettre sélectivement la rotation dudit arbre de manivelle (4) à un desdits premier et deuxième pignons principaux (52).

2. Moulinet de pêche à double palier suivant la revendication 1, dans lequel ledit élément de commutation (22) comprend une partie sortante (22) en saillie par rapport audit corps de moulinet (1), ladite partie sortante est pourvue d'un doigt d'accouplement (22b), ledit corps de moulinet comporte un cylindre support (13) qui fait saillie concentriquement audit arbre de manivelle (4), et ledit cylindre support maintient de façon tournante un bossage (23a) dudit organe de manoeuvre (23), ledit bossage comportant une rainure hélicoïdale (23c) qui peut s'accoupler avec ledit doigt d'accouplement.

3. Moulinet de pêche à double palier suivant la revendication 2, dans lequel lesdits moyens de manoeuvre comprennent ledit bossage (23a), supporté sur ledit cylindre support (13), et une partie de manoeuvre (23b) s'étendant vers l'extérieur à partir dudit bossage (23a), et un mécanisme de maintien à basculement instable est prévu entre ledit organe de manoeuvre et ledit corps de moulinet (1) supportant ledit organe de manoeuvre, pour rappeler ledit organe de manoeuvre (23) vers une position de fonctionnement à faible vitesse ou une position de fonctionnement à grande vitesse et pour retenir ledit organe de manoeuvre à cette position.

4. Moulinet de pêche à double palier suivant la revendication 3, dans lequel ledit mécanisme de maintien à basculement instable (30) comprend un premier support de ressort (32) monté de façon oscillante sur ledit corps de moulinet (1), un deuxième support de ressort (33) supporté de façon oscillante sur une partie de manoeuvre dudit organe de manoeuvre (23), et un ressort hélicoïdal (31) tenu entre lesdits supports de ressort, ledit premier support de ressort (32) s'écartant, à sa position de pivotement, du centre de la position de support dudit organe de manoeuvre (23).

5. Moulinet de pêche à double palier suivant la revendication 1, dans lequel ledit manchon (21) s'étend le long dudit arbre de manivelle et fait saillie vers l'extérieur par rapport audit corps de moulinet (1), lesdits moyens de freinage côté manchon (7a,7b) sont supportés sur cette partie en saillie en face desdits moyens de freinage côté arbre de manivelle (6a,6b) supportés sur ledit arbre de manivelle (4),et un organe de réglage (a) est monté par vissage sur ledit arbre de manivelle de façon à se visser vers l'avant pour régler une force de freinage de retenue dudit mécanisme de freinage comprenant les dits moyens de freinage respectifs (6a,6b,7a,7b).

6. Moulinet de pêche à double palier suivant la revendication 5, dans lequel un pignon anti-rotation inverse (10) est supporté de façon tournante à la base du dit arbre de manivelle (4), ledit corps de moulinet (1) comportant un cliquet anti-rotation inverse (20) qui peut venir en prise avec ledit pignon anti-rotation inverse (10), lesdits moyens de freinage côté manchon (7a,7b) sont supportés à l'extrémité extérieure dudit manchon (21), et lesdits moyens de freinage côté arbre de manivelle en contact de pression avec ledit pignon antirotation inverse (10) sont supportés à la base dudit arbre de manivelle (4).
